# EUROPÄISCHE PATENTANMELDUNG

(11) **EP 1 067 051 A1**
(43) Veröffentlichungstag der Anmeldung: **10.01.2001**
(21) Anmeldenummer: 00112492.4
(22) Anmeldetag: 13.06.2000
(51) Int. Cl.: B65B 51/30

(54) **Einrichtung zum Herstellen von mit Schüttgut gefüllten Schlauchbeuteln**

(30) Priorität: 07.07.1999 DE 29911847 U
(71) Anmelder: Vision Verpackungstechnik GmbH, 35305 Grünberg (DE)
(72) Erfinder: Helwig, Christian, 35625 Hüttenberg Rechtenbach (DE); Matheyka, Thomas, 65817 Eppstein (DE)
(74) Vertreter: Meier, Friedrich, Dipl.-Ing.

(57) **Zusammenfassung**

Zur Herstellung von mit Schüttgut gefüllten Schlauchbeuteln, sind den Siegelwerkzeugen stangenartige Elemente (Schliessstangen)(7) zugeordnet, die die Folie vor dem Versiegeln flach drücken und damit auch das Nachfallen von Schüttgut in den Siegelbereich verhindern. Damit der Siegelbereich frei von Schüttgut ist, werden sogenannte Stripper (12) eingesetzt, die aussen an der flach gedrückten Folie entlang streifen und damit Reste des Schüttgutes aus dem Siegelbereich entfernen. Nach der Erfindung wird der Stripper (12) direkt auf das Siegelwerkzeug bzw. dessen Träger aufgesetzt und durch die Bewegung der Schliessstangen (7) gesteuert.

## Beschreibung

Bei der Verpackung von schüttbarem, aber etwas sperrigen Produkten in Folienschlauchbeuteln, kommt es häufig beim Füllen der Folien zu einer Brückenbildung und damit auch zu Füllstaus. Beim Siegeln der Folien muss dafür Sorge getragen werden, dass Teile des Schüttgutes nicht im Nahtbereich der Siegelbacken hängen bleiben oder dass bei bröselnden Produkten Schüttgutteile durch unkontrollierten Nachfall, im Bereich der Siegelnaht hängen bleiben. Typisch für Schüttgutprodukte mit einem geringen spezifischen Gewicht, sind Kartoffelchips.

Selbst bei sehr präzisen Dosierungen der Abfüllanlage, kann es durch den schwebenden Charakter der Produkte passieren, dass Nachzügler in dem Augenblick noch im Siegelbereich schweben oder dort hängen bleiben, wenn sich die Siegelwerkzeuge schliessen. Werden Schüttgutteile im Nahtbereich eingesiegelt, so bleibt ein solcher Beutel offen, zumindest aber ist er unansehlich und damit unverkäuflich.

Die Erfindung bezieht sich auf eine Einrichtung zur Herstellung von mit Schüttgut und dgl. gefüllten Schlauchbeuteln z.B. aus kontinuierlich durchlaufenden Folienschläuchen, unter Verwendung von Siegelwerkzeugen, die die Folienschläuche, im Abstand der Beutellänge versiegeln oder verschweissen, sowie den Werkzeugen zugeordnete Paare von unmittelbar an den Siegelwerkzeugen bzw. deren Träger gehalterten Schliessstangen, durch die die Folienschläuche vor dem Schliessen der Siegelwerkzeuge gegen eine Federkraft oder dgl. flach zusammengedrückt werden, sowie an die Folien anlegbare Ausstreifer (Stripper), durch die Reste des Schüttgutes mit einer in Durchlaufrichtung wirksamem Wischbewegung aus dem Siegelbereich entfernt werden.

Bei einer bekannten Ausführungsform sind die Schweiss- bzw. Siegelwerkzeuge paarweise auf rotierenden Wellen montiert. Die beiderseits der Schlauchfolie angeordneten Wellen drehen die Werkzeugpaare mit solcher Drehzahl, dass die Werkzeugpaare jeweils nach dem Durchlauf einer Beutellänge, gegenüberstehend, aufeinander treffen, mit der Folie ein Stück mitlaufen und dann mit dem zweiten, Werkzeugpaar, die nachfolgende Versiegelung bewirken.

Mit den Siegelwerkzeugen sind auf den drehenden Wellen je eine die Schlauchfolie zusammendrückende Schliessstange und ein Stripper montiert, die dafür sorgen, dass die Folie vor dem Aufeinandertreffen der Siegelwerkzeuge zusammengedrückt und ausgestreift wird.

Damit wird die Folie für den Siegelvorgang vorbereitet und gleichzeitig verhindert, dass Schüttgut in den Siegelbereich nachfällt. Durch den Ausstreifer, in englisch "stripper" genannt, werden die Reste des Schüttgutes auf der Innenseite der Schlauchfolie aus dem Siegelbereich entfernt.

Die EP - PS 0 666 215 zeigt und beschreibt eine Einrichtung der beschriebenen Art, bei der Schliessstangen und die stangenförmigen Stripper quer zur durchlaufenden Folie derart neben dem Träger der Siegelwerkzeuge auf einer Trägerplatte montiert sind, dass sie bedingt durch andere Abstände zur Drehachse und Versetzungen gegenüber der Welle, vor dem Siegelwerkzeug wirksam werden. Die Schliessstangen und die stangenförmigen Stripper, sind auf ihren Trägern derart schwenkbar gelagert und mit Federn belastet, dass sie sowohl die Folie zusammendrücken, als auch die Reste des Schüttgutes mit einer Wischbewegung aus dem Siegelbereich ausstreifen können.

Zum Schutz der verschweissten Schlauchbeutel gegen die heissen Siegelwerkzeuge, sind bei dieser bekannten Ausführungsform mit den als Stripper dienenden Stangen, flügelartige, gegen die verschweissten Beutel wirksame Abschirmungen verbunden, die zwischen dem gerade versiegelten Beutel und den Siegelwerkzeugen angeordnet, von den Antriebswellen bewegt werden.

Damit die Siegelwerkzeuge während der für das Siegeln notwendigen Dauer die Schlauchfolie zusammenpressen und beheizen, sind die Werkzeuge beweglich gelagert und mit Druckfedern belastet. Damit ist es möglich, die an sich kreisförmige Bewegung der Siegelwerkzeuge während des Siegelvorganges über die notwendige Siegelstrecke zu einer Geraden abzuflachen.

Während einer vollen Umdrehung der die Siegelwerkzeuge tragenden Wellen, ergeben sich mit dieser bekannten Einrichtung zwei Siegelvorgänge. Die Halterung und Lagerung der notwendigen Teile macht die Einrichtung schwer, beansprucht Raum und macht die Einrichtung träge in der Bewegung, wodurch auch die Taktfrequenz der Abpackeinrichtung eingeschränkt ist. Bedingt durch die rotierenden Bewegungsabläufe und die nur begrenzt gegeneinander versetzbaren Bewegungsachsen für Siegelwerkzeug, Schliessstangen und Stripper, ergeben sich nur sehr begrenzte Einwirkzonen der Schliessstangen und der Stripper.

In gleichartiger Form arbeitet auch die Versiegelungseinrichtung nach der US Ps 4 663 917. Bei einer Einrichtung nach der DE Ps 40 05 078 sind die Schliessstangen unmittelbar unter Einsatz von Federn an den Siegelwerkzeugen befestigt. Durch die federbelasteten Schliessstangen wird die Folie beiderseits der Siegelbacken zusammengedrückt. Eine Ausstreifbewegung ist bei dieser Konstruktion nicht vorgesehen.

Das in der DE -A- 24 01 800 beschriebene Verfahren setzt zwar einen Abstreifer ein, der aber nur die Funktion der beschriebenen Schliessstangen hat. Eine unmittelbare Kopplung und Bewegung dieser Teile mit dem Siegelwerkzeug im Sinne einer Ausstreifbewegung ist nicht gegeben.

Der Erfindung liegt die Aufgabe zugrunde, eine Einrichtung der beschriebenen Art dahingehend zu verbessern, dass durch die Anordnung der Schliessstangen und in Ergänzung, auch die Stripper, unmittelbar am Siegelwerkzeug bzw. dem Werkzeugträger, eine ausreichend grosse und angepasste Bewegung dieser Elemente und ein sicherer Arbeitsablauf bei hoher Taktfrequenz gewährleistet ist.

Gemäss der Erfindung wird dies bei einer Einrichtung der beschriebenen Art dadurch erreicht, dass die Schliessstangen derart mit den Strippern gekoppelt sind, dass durch deren Schliessbewegung, die Stripper unter Anlage an die Folie, vor dem Schliessen der Siegelwerkzeuge, in Durchlaufrichtung abgezogen werden.

Vorteilhaft ist es, die Halter der mit einer Rückstellfeder belasteten Schliessstangen, auf den Trägern der Siegelwerkzeuge zu befestigen. Mit der Schliessbewegung der Siegelbacken legen sich die Schliessstangen vorlaufend gegen die Folie und drücken diese unter Anspannung einer Feder flach zusammen. Diese Bewegung der Schliessstangen wird nach einer Ausgestaltung der Erfindung auf die als Stripper dienende Stangen übertragen. Die Stripper werden durch die Bewegung der Schliessstangen an der Folie anliegend, in Füllrichtung bewegt, wodurch Reste des eventuell noch innen am Folienschlauch anliegenden Schüttgutes, aus dem Siegelbereich entfernt werden.

An Hand der Zeichnungen wird ein Ausführungsbeispiel beschrieben und die Wirkungsweise erläutert.
Die Figur 1 zeigt in schematischer Darstellung die prinzipielle Anordnung einer Einrichtung nach der Erfindung.
Die Figur 2 zeigt eine Einrichtung nach der Erfindung mit geöffneten Siegelbacken, zwischen denen ein gefüllter Schlauchbeutel läuft.
Die Figur 3 zeigt die Einrichtung nach Fig. 2, bei der die Siegelbacken kurz vor dem Schliessen sind.

Gleiche oder gleichartige Teil sind in allen Figuren mit gleichen Bezugszeichen versehen.

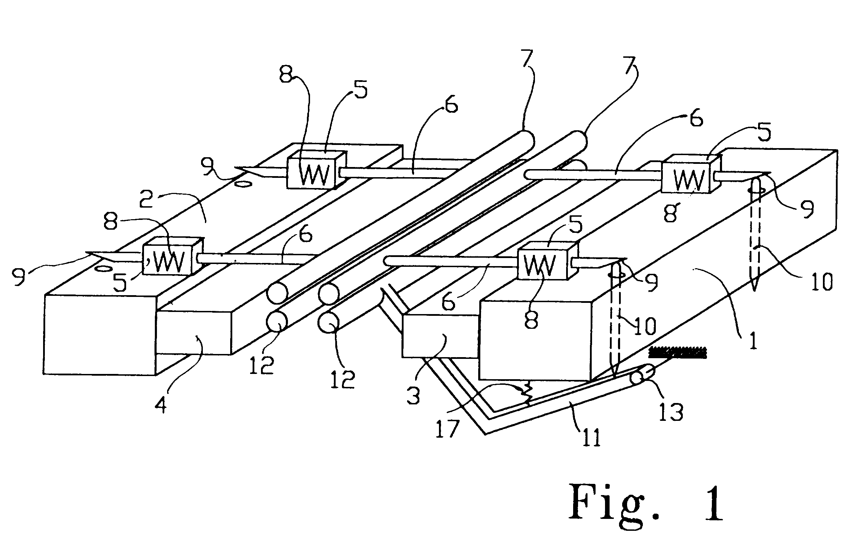

Die Fig. 1 zeigt die beiden, von einem nicht gezeichneten Antrieb bewegten Werkzeugträger 1 und 2, mit den zugehörigen Siegelbacken 3 und 4. Auf jedem der Werkzeugträger 1,2 sind Halter 5 für die Befestigung und Führung der Tragstangen 6 paarweise angeordnet. An dem freien Enden der Tragstangen 6 sind die Schliessstangen 7 befestigt. Damit die Folie durch die Schliessstangen 7 mit definierter Kraft vor dem Schliessen der Siegelbacken 3,4 flach zusammengepresst werden, sind im Halter 5, Rückstellfedern 8 angeordnet.

Werden die Werkzeugträger 1,2 zum Siegeln der Schlauchbeutel gegeneinander bewegt, so treffen die Schliessstangen 7 unter Einschluss der nicht gezeichneten Schlauchfolie aufeinander und schieben die Tragstangen 6 durch die Halter 5 gegen die Rückstellkraft der Rückstellfeder 8 nach hinten.

Am rückseitigen Ende der Tragstangen 6 bilden diese oder damit verbundene Zusatzteile, Schrägflächen 9. an denen die im Werkzeugträger 1,2 geführten Taststifte 10 anliegen. Mit ihrem unteren Ende drücken die Taststifte 10 auf Teile eines Gestänges 11.

Das Gestänge 11 trägt am vorderen Ende die als Stripper wirkenden Stangen 12. Aus Gründen der Übersicht ist das Gestänge 11 in Fig. 1 nur einmal und nur schematisch dargestellt. Selbstverständlich gehört zu jedem der Taststifte 10 ein entsprechendes Gestänge 11.

Das Gestänge 11 ist an den Werkzeugträgern 1,2 im Lager 13 derart gehaltert, dass die durch die Schrägflächen 9 beim Anlegen der Schliessstangen 7 an die Folie erzeugte Bewegung der Tragstangen 6, über die Taststifte 10 mechanisch derart übersetzt wird, dass die an den Folien anliegenden Stangen 12 vor dem Schliessen der Siegelbacken 3,4 nach unten aus dem Siegelbereich entfernt werden.

Durch diese Bewegung werden die eventuell an der Innenwandung der Folie haftenden Reste des Schüttgutes ausgestreift. Damit werden die Siegelflächen frei von Resten des Schüttgutes.

Die gezeigte mechanische Übersetzung kann angepasst werden. So kann im Bedarfsfall auch eine Übersetzung der Bewegung der Schliessstangen 7 auf die Bewegung der Stripper 12, grösser als drei gewählt oder die Bewegung durch Hilfseinrichtungen mit Pressluft oder dgl. unterstützt werden.

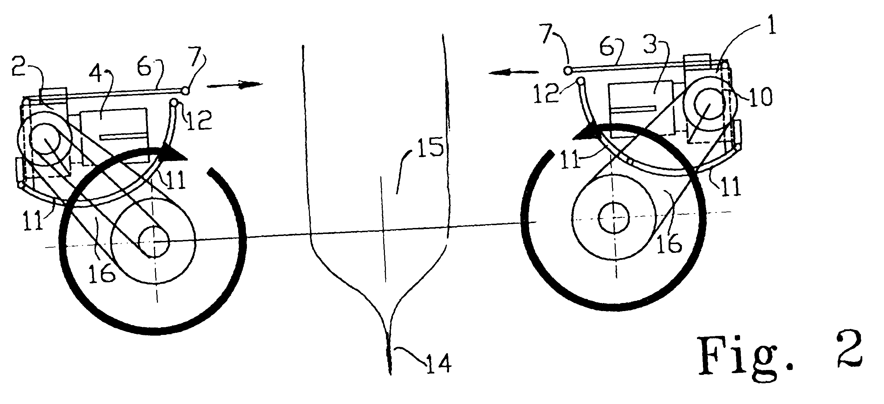

Die Fig. 2 zeigt ein Siegelwerkzeug in einer geöffneten Position, in der der Schlauchbeutel 14 mit Schüttgut 15 gefüllt werden kann. Die Werkzeugträger 1,2 mit den Siegelbacken 3,4 sind an Kurbeln 16 gelagert, die mit Rückdrehelementen derart ausgestattet sind, dass bei einer Kurbelumdrehung die Lage der Siegelbacken 3,4 immer gegeneinander und damit auch gegen die Schlauchfolie 14 gerichtet ist.

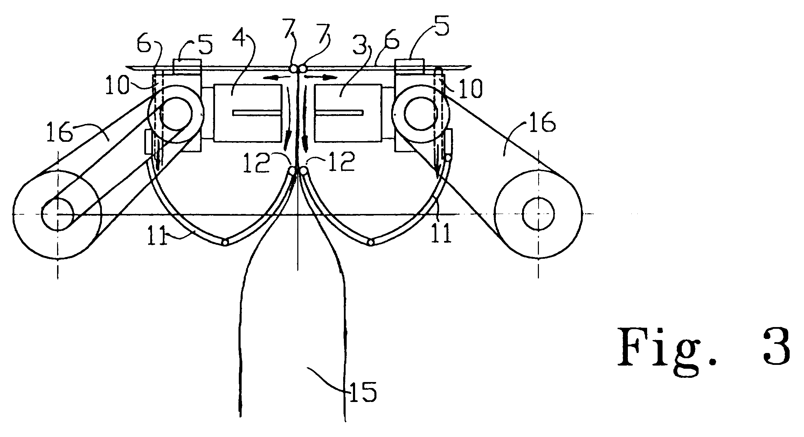

Treffen bei einer Schliessbewegung der Siegelbacken 3,4, die Schliessstangen 7 aufeinander, so werden die Tragstangen 6 gegen die Rückstellkraft der Federn 8 nach hinten bewegt. Über die Schrägflächen 9 werden die Taststifte 10 nach unten gedrückt und damit, wie in Figur 3 gezeigt, die an der Folie anliegenden Stripper - Stangen 12 durch das Gestänge 11, noch vor dem Aufeinandertreffen der Siegelbacken 3,4 nach unten weggezogen. Damit werden die im Siegelbereich ev. noch vorhandenen Reste des Schüttgutes 15 ausgestreift. Als Rückstellkraft für die Stangen 12 ist eine Feder 17 eingezeichnet. Diese kann auch durch Antriebe oder einen Gewichtsausgleich am Hebelarm 11 ersetzt werden.

Die mit dem Ausführungsbeispiel gezeigte Aufbauform hat den Vorteil, dass nicht nur die Werkzeugträger 1,2 mit den Siegelwerkzeugen 3,4, einer nur kleinen kreisenden Parallelbewegung ausgesetzt sind, sondern auch die notwendigen Energieversorgungs- und Steuereinrichtungen ohne Wickeleffekt und ohne Drehkupplungen arbeiten. Durch die Montage der Schliessstangen 7 und Stripper - Stangen 12 auf den Werkzeugträgern 1,2, können diese Teile ohne aufwendige, schwere und damit träge Bauelemente arbeiten, was den Einsatz bei Abpackmaschinen mit hoher Taktfrequenz wesentlich erleichtert.

Durch die Aufbauform der Schliessstangen 7 in unmittelbarem Kontakt zum Siegelwerkzeug 3,4 und losgelöst von einem rotierenden Werkzeugträger, eignet sich die beschriebene Einrichtung nach der Erfindung auch für Abpackeinrichtungen, bei denen statt eines kontinuierlich durchlaufenden Folienschlauches, auch einzeln zugeführte Verpackungsteile und intermittierende Antriebe eingesetzt werden.

## Patentansprüche

1. Einrichtung zur Herstellung von mit Schüttgut und dgl. gefüllten Schlauchbeuteln, unter Verwendung von Siegelwerkzeugen, die die Folienschläuche, im Abstand der Beutellänge versiegeln oder verschweissen, sowie den Werkzeugen zugeordnete Paare von unmittelbar an den Siegelwerkzeugen bzw. deren Träger gehalterten Schliessstangen, durch die die Folienschläuche vor dem Schliessen der Siegelwerkzeuge gegen eine Federkraft oder dgl. flach zusammengedrückt werden, sowie an die Folien anlegbare Ausstreifer (Stripper), durch die Reste des Schüttgutes mit einer in Durchlaufrichtung wirksamem Wischbewegung aus dem Siegelbereich entfernt werden, **dadurch gekennzeichnet, dass** die Schliessstangen (7) mit den Strippern (12) derart gekoppelt sind, daß durch deren Schliessbewegung, die Stripper (12) unter Anlage an die Folie (14), vor dem Schliessen der Siegelbacken (3,4), in Durchlaufrichtung abgezogen werden.

2. Einrichtung nach Anspruch 1, **dadurch gekennzeichnet, dass** auf den Siegelbacken (3,4) bzw. deren Träger (1,2), Halter (5) für die an Tragstangen (6) befestigten Schliessstangen (7) angeordnet sind, in denen die Tragstangen (6) unter Belastung mit einer Rückstellfeder (8) geführt werden.

3. Einrichtung nach Anspruch 1 und 2, **dadurch gekennzeichnet, dass** die Stripper (12) in Durchlaufrichtung hinter den Siegelbnacken (3,4) derart gehaltert sind, daß sie im Bereich der Siegelbacken (3,4) an der Folie (14) anliegend, von der Bewegung der Tragstangen (6) gegen die Kraft der Federn (8), unter Anlage an die Folie (14) aus dem Bereich der Siegelbacken (3,4) abgezogen werden.

4. Einrichtung nach Anspruch 1 bis 3, **dadurch gekennzeichnet, dass** die Bewegung der Stripper (12) durch geeignete Lager (13), gegenüber der Bewegung der Schliessstangen (7), mindestens um den Faktor drei, mechanisch übersetzt ist.

5. Einrichtung nach Anspruch 1 bis 4 **dadurch gekennzeichnet, dass** die Bewegung der Tragstangen (6) über einen am Werkzeugträger (3,4) befestigten Steller (10) mechanisch auf Teile der Stripper (12) bzw. deren Steuerhebel (11) übertragen wird.

6. Einrichtung nach Anspruch 1 bis 5 **dadurch gekennzeichnet, dass** die an der Folie (14) anliegenden Stripper (12) durch die Bewegung der Tragstangen (6) über Schrägflächen (9), die als Tastfinger (10) ausgebildeten Steller und die Gestänge (11) im Sinne einer Ausstreifbewegung betätigt werden.
